**Europäisches Patentamt**

**European Patent Office**

**Office européen des brevets**

(19)

(11) Veröffentlichungsnummer: **0 171 080 B1**

# EUROPÄISCHE PATENTSCHRIFT

(12)

(45) Veröffentlichungstag der Patentschrift :
23.01.91 Patentblatt 91/04

(51) Int. Cl.$^5$ : **H04Q 11/04, H04M 11/06**

(21) Anmeldenummer : 85109988.7

(22) Anmeldetag : 08.08.85

(54) Diensteintegrierendes Telekommunikationssystem für Schmalband-Dienste.

(30) Priorität : 10.08.84 DE 3429582

(43) Veröffentlichungstag der Anmeldung :
12.02.86 Patentblatt 86/07

(45) Bekanntmachung des Hinweises auf die
Patenterteilung :
23.01.91 Patentblatt 91/04

(84) Benannte Vertragsstaaten :
AT BE CH DE FR GB IT LI NL SE

(56) Entgegenhaltungen :
EP-A- 0 094 096
ICL TECHNICAL JOURNAL, Band 3, Nr. 3, Mai
1983, Seiten 313-329, London, GB; C.J.
HUGHES: "Evolution of switched
telecommunication networks"

(56) Entgegenhaltungen :
IEEE TRANSACTIONS ON
COMMUNICATIONS, Band COM-30, Nr. 9,
September 1982, Seiten 2185-2210, IEEE, New
York, US; J.-A. LE GUILLOU et al.: "PRANA at
the age of four: multiservice loops reach out"
IEEE TRANSACTIONS ON
COMMUNICATIONS, Band COM-26, Nr. 7, Juli
1978, Seiten 983-990, IEEE, New York, US; E.G.
RAWSON et al.: "Fibernet: multimode optical
fibers for local computer networks"
NACHRICHTENTECHNISCHE ZEITSCHRIFT,
Band 36, Nr. 7, 1983, Seiten 428-433, Berlin,
DE; K. KNEISEL: "Bigfon-Vergleich der
verschiedenen firmenindividuellen
Systemlösungen"

(73) Patentinhaber : Siemens Aktiengesellschaft
Wittelsbacherplatz 2
D-8000 München 2 (DE)

(72) Erfinder : Schaffer, Bernhard, Dipl.-Ing.
Waldheimstrasse 3
D-8032 Lochham (DE)

## Beschreibung

Neuere Entwicklungen der Fernmeldetechnik führen zu diensteintegrierenden Digitalnetzen (ISDN), die in der Ebene der Teilnehmeranschlußleitungen eine Sternstruktur von Lichtwellenleitern aufweisen ; solche mit Lichtwellenleitern ausgestattete diensteintegrierende Digitalnetze (ISDN) sind grundsätzlich für Schmalband- und Breitband-Dienste geeignet (DE-PS 24 21 002). Es ist auch möglich, eine Lichtwellenleiter-Faser nur für ISDN-Schmalband-Dienste zu nutzen ; die Nutzung eines Lichtwellenleiters nur für ISDN-Schmalband-Dienste wird beispielsweise dann in Frage kommen, wenn man im Hinblick auf eine spätere Einführung von Breitband-Diensten dafür erforderliche Lichtwellenleiter-Teilnehmeranschlußleitungen bereits verlegt hat, Teilnehmerstellen und/oder Vermittlungsstellen aber noch nicht mit Breitbandeinrichtungen ausgerüstet sind.

In einem Sternnetz von Lichtwellenleiter-Teilnehmeranschlußleitungen ist, sofern man nicht elektrische Vorfeldeinrichtungen vorsieht, für jeden Teilnehmer eine teilnehmerindividuelle, zwischen Teilnehmerstelle und Vermittlungsstelle verlaufende Lichtwellenleiter- Teilnehmeranschlußleitung vorgesehen. Solche teilnehmerindividuell zwischen Teilnehmerstelle und Vermittlungsstelle verlaufende Teilnehmeranschlußleitungen vermeiden (topologisch ggf. als Sternnetz erscheinende) Lichtwellenleiter-Busnetze (siehe z.B. Zürich Seminar 1978, paper A6.1....7, FIG 3), die indessen im allgemeinen relativ komplizierte Buszugriffsverfahren mit sich bringen.

Es ist auch bereits (aus ICL TECHNICAL JOURNAL 3(1983)3, 313...329, Fig.6a) ein Telekommunikationssystem bekannt, in dem eine Mehrzahl von Teilnehmerstellen jeweils über ein Paar von optischen Fasern an einen Konzentrator angeschlossen ist, der mit einer Vermittlungsstelle über ein Multiplexübertragungssystem verbunden ist ; dabei kann es sich um ein synchrones Zeitmultiplexsystem mit fester Zeitschlitzzuordnung, um ein Paketübertragungssystem oder um ein synchrones Zeitmultiplexsystem mit dynamischer (Bitratenabhängiger) Zeitschlitzzuordnung handeln (a.a.O., Fig.7), wobei die Frage der Signalübertragung über die Teilnehmeranschlußleitung offen bleibt.

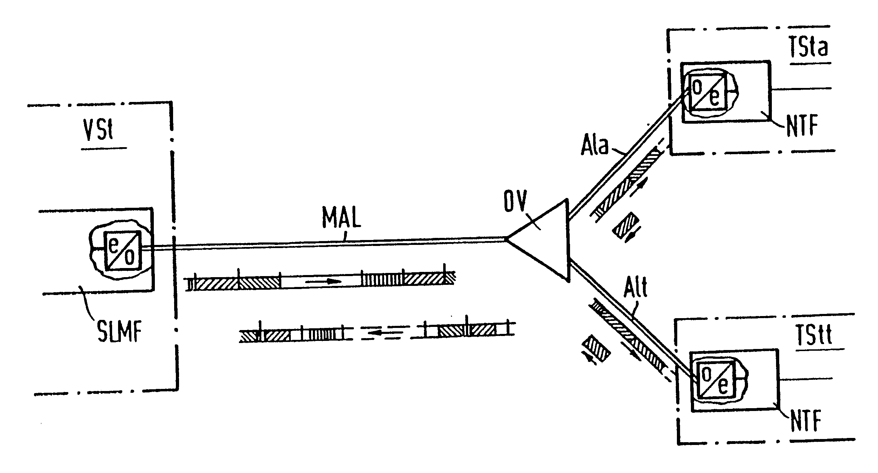

Des weiteren ist (aus IEEE TRANSACTIONS ON COMMUNICATIONS, COM-30(1982)9, 2185...2210, Fig.1 und Fig.4) ein Telekommunikationssystem bekannt, in dem eine Mehrzahl von Teilnehmerstellen jeweils über eine elektrische Zweidrahtleitung an einen Konzentrator angeschlossen ist, der mit der Vermittlungsstelle über eine (gemäß Fig.8 a.a.0.) im synchronen Zeitmultiplex betriebene elektrische VierdrahtMultiplexleitung verbunden ist.

Bekannt ist ferner (aus EP-Al-O 094 096) ein BreitbandKommunikationssystem mit jeweils zwischen Vermittlungsstelle und Teilnehmerstelle verlaufenden, jeweils einen Lichtwellenleiter aufweisenden Teilnehmeranschlußleitungen für Bidirektional-Bildkommunikations-Breitbandsignale und demgegenüber schmalbandige Digitalkommunikationssignale, insbesondere 64-Bit/s-Digitalsignale, bei dem über den die Teilnehmeranschlußleitung bildenden einzigen Lichtwellenleiter alle DigitalkommunikationsSchmalbandsignale und Bidirektional-BildkommunikationsDigitalsignale der beiden Übertragungsrichtungen zwischen Vermittlungsstelle und Teilnehmerstelle und umgekehrt im Zeitgetrenntlageverfahren übertragen werden.

Die Erfindung stellt sich nun die Aufgabe, ein Telekommunikationssystem mit Lichtwellenleitern in der Teilnehmeranschlußebene anzugeben, das sowohl ein kompliziertes Buszugriffsverfahren als auch von der Vermittlungsstelle ausgehende Lichtwellenleiter Teilnehmeranschlußleitungen zu vermeiden gestattet und das zugleich einen vorteilhaften Weg der Signalübertragung zwischen Vermittlungsstelle und Teilnehmerstelle und umgekehrt aufzeigt.

Die Erfindung betrifft ein diensteintegrierendes Telekommunikationssystem für Schmalbanddienste, in dem jeweils eine Mehrzahl von Teilnehmerstellen jeweils über eine eigene Lichtwellenleiter-Teilnehmeranschlußleitung an einen Konzentrator angeschlossen ist, der an eine Multiplexanschlußschaltung einer Vermittlungsstelle über eine Multiplexleitung angeschlossen ist ; dieses Telekommunikationssystem ist erfindungsgemäß dadurch gekennzeichnet, daß die einzelnen Teilnehmerstellen jeweils über ihre Lichtwellenleiter-Teilnehmeranschlußleitung an einen gemeinsamen optischen Verzweiger angeschlossen sind, der an die Multiplexanschlußschaltung der Vermittlungsstelle übber eine verzweigerindividuelle Lichtwellenleiter-Anschlußleitung angeschlossen ist, wobei Mittel derart vorgesehen sind, daß die Signalübertragung von der Vermittlungsstelle zu den Teilnehmerstellen hin in einem ISDN-Basisanschluß (BA)-Multiplexrahmen vor sich geht und daß Mittel derart vorgesehen sind, daß die Signalübertragung von den Teilnehmerstellen aus zur Vermittlungsstelle jeweils in dem der jeweiligen Teilnehmerstelle zugeordneten Zeitkanal des ISDN-Basisanschluß-Multiplexrahmens in Bursts solcher Dauer und Zeitlage vor sich geht, daß auf der verzweigerindividuellen Lichtwellenleiter-Anschlußleitung ein über die Lichtwellenleiter-Teilnehmeranschlußleitung maximaler Laufzeit übertragener Burst sich noch nicht mit dem im Multiplexrahmen nachfolgenden Burst und ein über die Lichtwellenleiter-Teilnehmeranschlußleitung minimaler Laufzeit übertragener Burst sich noch nicht mit dem im Multiplexrahmen vorangehenden Burst überschneidet.

Die Erfindung, die vorteilhafterweise ohne elektrische Vorfeldeinrichtungen auskommt und keine sich zwischen Vermittlungsstelle und Teilnehmerstellen erstreckenden Lichtwellenleiter-Teilnehmeranschlußleitungen erfordert, bringt den weiteren Vorteil mit sich, daß auf der verzweigerindividuellen Lichtwellenleiter-Anschlußleitung nur Multiplex-Funktionen realisiert werden, so daß es keines komplizierteren Buszugriffssystems bedarf.

In weiterer Ausgestaltung der Erfindung können Mittel derart vorgesehen werden, daß die Burstdauer höchstens gleich der um das Doppelte der Differenz zwischen maximaler und minimaler Laufzeit verringerten Zeitfachdauer ist; dies gestattet es, daß die Bursts von den einzelnen Teilnehmerstellen aus jeweils mit der gleichen Zeitlage innerhalb des jeweiligen Zeitfachs abgesandt werden.

In einer weiteren Ausgestaltung der Erfindung ist es aber auch möglich, daß Mittel derart vorgesehen werden, daß die Bursts von den einzelnen Teilnehmerstellen jeweils in einer solchen teilnehmerstellenindividuellen Zeitlage abgesandt werden, daß auf der verzweigerindividuellen Lichtwellenleiter-Anschlußleitung die einzelnen Bursts in zumindest angenähert gleichen Abständen aufeinanderfolgen; dies macht eine Verlängerung der Bursts und damit eine Verringerung der Bitrate innerhalb der Bursts und/oder die Bewältigung größerer Längen- bzw. Laufzeitunterschiede zwischen den einzelnen Lichtwellenleiter-Teilnehmeranschlußleitungen möglich.

In der umgekehrten Übertragungsrichtung kann man vorsehen, daß von den teilnehmerstellenseitigen Netzabschlußeinrichtungen jeweils nur die in dem der jeweiligen Teilnehmerstelle zugehörigen Zeitkanal empfangenen Signale an das jeweilige Teilnehmer-Endgerät weitergegeben werden, was entsprechende Eingriffe beim jeweiligen Endgerät selbst erübrigt.

Den einzelnen Teilnehmerstellen braucht in weiterer Ausgestaltung der Erfindung ein Zeitkanal jeweils nur auf Anforderung bzw. für die Dauer einer Verbindung zugeteilt zu sein, was es ermöglicht, eine dem zu erwartenden Verkehrsaufkommen entsprechend erhöhte Anzahl von Teilnehmerstellen über die gemeinsame, verzweigerindividuelle Lichtwellenleiter-Anschlußleitung an die Vermittlungsstelle anzuschließen.

Weitere Besonderheiten der Erfindung werden aus der nachfolgenden näheren Erläuterung eines Ausführungsbeispiels eines Telekommunikationssystems gemäß der Erfindung anhand der Zeichnung ersichtlich.

In der Zeichnung ist schematisch in einem zum Verständnis der Erfindung erforderlichen Umfang ein Telekommunikationssystem mit über Lichtwellenleiter- Anschlußleitungen MAl, Ala, ..., Alt an eine Vermittlungsstelle VSt angeschlossenen Teilnehmerstellen TSta,...,TStt dargestellt. In diesem Telekommunikationssystem ist jeweils eine Mehrzahl von Teilnehmerstellen TSta,...TStt jeweils über eine eigene Lichtwellenleiter-Teilnehmeranschlußleitung Ala, ...Alt an einen gemeinsamen optischen Verzweiger OV angeschlossen, der seinerseits über eine verzweigerindividuelle Lichtwellenleiter-Anschlußleitung MAl an eine Multiplexanschlußschaltung SLMF der Vermittlungsstelle VSt angeschlossen ist. Als Verzweiger kann dabei beispielsweise ein Durchgangsmischer oder ein Reflektionsmischer Anwendung finden. Solche Mischer sind (z.B. aus telcom report 6 (1983) Beiheft "Nachrichtenübertragung mit Licht", Seite 110, Bilder 2g und 2h) bekannt, weshalb hier darauf nicht weiter eingegangen zu werden braucht.

Zur Richtungstrennung bei einfasrigen Lichtwellenleitern MAl, Ala,...Alt kann ein bidirektionaler Wellenlängenmultiplex vorgesehen sein, wobei zweckmäßigerweise zur Signalübertragung von der Vermittlungsstelle zu den Teilnehmerstellen hin das 850-nm-Band und zur Signalübertragung von den Teilnehmerstellen zu der Vermittlungsstelle hin das 1300-nm-Band genutzt wird; als elektro/optischer Wandler und opto/elektrischer Wandler e/o werden zweckmäßigerweise zumindest in der Multiplexanschlußschaltung SLMF der Vermittlungsstelle VSt eine Laserdiode (LD) bzw. eine Avalanche-Photodiode (APD) eingesetzt, während bei den Teilnehmerstellen TSta,...TStt als Wandler o/e ggf. Lumineszenzdioden (LED) und PIN-Photodioden genügen.

Wie in der Zeichnung angedeutet ist, geht die Signalübertragung von der Vermittlungsstelle VSt zu den Teilnehmerstellen TSt hin in einem ISDN-Basisanschluß(BA)- Multiplexrahmen vor sich. Dabei erhält im Beispiel jede der teilnehmerstellenindividuellen Netzabschlußeinrichtungen NTF das volle (beispielsweise 2-Mbit/s-)Multiplexsignal, wobei dann die einzelnen Netzabschlußeinrichtungen NTF jeweils nur die in dem der jeweiligen Teilnehmerstelle TSt zugehörgen Zeitkanal empfangenen Signale an das jeweilige Teilnehmer-Endgerät weitergeben. Dies kann in an sich bekannter Weise mit Hilfe einer in der Netzabschlußeinrichtung NTF fest eingestellten Adresse geschehen, ohne daß hier noch näher darauf eingegangen werden müßte.

In der umgekehrten Übertragungsrichtung geht die Signalübertragung von den Teilnehmerstellen TSt aus zur Vermittlungsstelle VSt hin jeweils in dem der jeweiligen Teilnehmerstelle TSt zugehörigen Zeitkanal des ISDN-BA-Multiplexrahmens in Bursts vor sich: Jede Teilnehmerstelle TSt sendet, nachdem sie ihr Zeitfach im empfangenen Multiplexrahmen erkannt hat, ihre Information in einem Burst zur Vermittlungsstelle VSt. Dieser Burst ist so kurz, d.h. wird mit so hoher Bitrate gesendet, daß Längen- und damit Laufzeitunterschiede der einzelnen Teilnehmeranschlußleitungen Ala,...Alt ohne störende Auswirkungen bleiben. Dazu weisen, wie dies auch in der Zeichnung angedeutet ist, die Bursts innerhalb des der jeweiligen Teilnehmerstelle zugeordneten Zeitkanals jeweils eine solche Dauer und Zeitlage auf, daß auf der verzweigerindividuellen Lichtwellenleiter-

Anschlußleitung MAI ein über eine Lichtwellenleiter-Teilnehmeranschlußleitung Al maximaler Laufzeit übertragener Burst sich noch nicht mit dem im Multiplexrahmen nachfolgenden Burst und ein über eine Lichtwellenleiter-Teilnehmeranschlußleitung Al minimaler Laufzeit übertragener Burst sich noch nicht mit dem im Multiplexrahmen vorangehenden Burst überschneidet. Wird der optische Verzweiger OV beispielsweise im Kabelendverzweiger untergebracht, so werden die Längenunterschiede der Teilnehmeranschlußleitungen Al nicht sehr groß sein, und die Bitrate der Bursts, von der ja auch die überbrückbare Entfernung abhängt, wird relativ niedrig bleiben. Werden dabei die Bursts so kurz gemacht, daß die Burstdauer höchstens gleich der um das Doppelte der Differenz zwischen maximaler und minimaler Laufzeit auf einer Teilnehmeranschlußleitung Al verringerten Zeitfachdauer ist, so können beispielsweise mit einer Burst-Bitrate von 8 Mbit/s und 12 Teilnehmern im Multiplexsystem Längenunterschiede bis zu etwa 500 m ausgeglichen werden.

Ein Ausgleich größerer Längenunterschiede und-/oder eine Verringerung der Bitrate innerhalb der Bursts wird dadurch möglich, daß die Bursts von den einzelnen Teilnehmerstellen TSta,...TStt jeweils in einer solchen teilnehmerstellenindividuellen Zeitlage abgesandt werden, daß auf der verzweigerindividuellen Lichtwellenleiter-Anschlußleitung MAI die einzelnen Bursts in zumindest angenähert gleichen Abständen aufeinanderfolgen. Hierzu kann in der Multiplexanschlußschaltung SLMF der Vermittlungsstelle VSt der Abstand zwischen den unterschiedlichen Bursts gemessen werden und von der Multiplexanschlußschaltung SLMF den einzelnen teilnehmerindividuellen Netzabschlußeinrichtungen NTF jeweils über einen Steuerkanal signalisiert werden, ob die von der betreffenden Netzabschlußeinrichtung NTF ausgesendeten Bursts die richtige Phasenlage (bezogen auf den Multiplexrahmen) haben oder zu verzögern sind. Hierzu kann bei der Inbetriebnahme der Multiplexstrecke eine Netzabschlußeinrichtung NTF nach der anderen zugeschaltet und in ihrer Burst-Phase eingestellt werden, was hier jedoch nicht weiter verfolgt werden soll, da dies zum Verständnis der Erfindung nicht mehr erforderlich ist.

Abschließend sei noch besonders bemerkt, daß nicht jeder Teilnehmerstelle ständig ein Zeitkanal zugeteilt sein muß, daß es alternativ vielmehr auch möglich ist, den einzelnen Teilnehmerstellen einen Zeitkanal jeweils erst auf Anforderung, für die Dauer einer Verbindung, zuzuteilen. Die Zuteilung von Zeitkanälen ist in der Zeitmultiplexübertragungs- und -vermittlungstechnik grundsätzlich bekannt, weshalb sich nähere Erläuterungen dazu an dieser Stelle erübrigen.

## Ansprüche

1. Diensteintegrierendes Telekommunikationssystem für Schmalbanddienste, in dem jeweils eine Mehrzahl von Teilnehmerstellen (TSta,...TStt) jeweils über eine eigene Lichtwellenleiter-Teilnehmeranschlußleitung (Ala,...Alt) an einen Konzentrator (OV) angeschlossen ist, der an eine Multiplexanschlußschaltung (SLMF) einer Vermittlungsstelle (VSt) über eine Multiplexleitung (MAI) angeschlossen ist, **dadurch gekennzeichnet,** daß die einzelnen Teilnehmerstellen (TSta,...TStt) jeweils über ihre Lichtwellenleiter-Teilnehmeranschlußleitung (Ala,...Alt) an einen gemeinsamen optischen Verzweiger (OV) angeschlossen sind, der an die Multiplexanschlußschaltung (SLMF) der Vermittlungsstelle (VSt) über eine verzwei erindividuelle Lichtwellenleiter-Anschlußleitung (MAI) angeschlossen ist, wobei Mittel derart vorgesehen sind, daß die Signalübertragung von der Vermittlungsstelle (VSt) aus zu den Teilnehmerstellen (TSt) hin in einem ISDNBasisanschluß (BA)-Multiplexrahmen vor sich geht und daß Mittel vorgesehen sind, daß die Signalübertragung von den Teilnehmerstellen (TSta,... TStt) aus zur Vermittlungsstelle (VSt) hin jeweils in dem der jeweiligen Teilnehmerstelle (TSt) zugehörigen Zeitkanal des ISDN-BA-Multiplexrahmens in Bursts solcher Dauer und Zeitlage vor sich geht, daß auf der verzweigerindividuellen Lichtwellenleiter-Anschlußleitung (MAI) ein über eine Lichtwellenleiter-Teilnehmeranschlußleitung (AI) maximaler Laufzeit übertragener Burst sich noch nicht mit dem im Multiplexrahmen nachfolgenden Burst und ein über eine Lichtwellenleiter-Teilnehmeranschlußleitung (AI) minimaler Laufzeit übertragener Burst sich noch nicht mit dem im Multiplexrahmen vorangehenden Burst überschneidet.

2. Telekommunikationssystem nach Anspruch 1, **dadurch gekennzeichnet,** daß Mittel derart vorgesehen sind, daß die Burstdauer höchstens gleich der um das Doppelte der Differenz zwischen maximaler und minimaler Laufzeit verringerten Zeitfachdauer (t) ist.

3. Telekommunikationssystem nach Anspruch 1 oder 2, **dadurch gekennzeichnet,** daß Mittel derart vorgesehen sind, daß die Bursts von den einzelnen Teilnehmerstellen (TSta,...TStt) jeweils in einer solchen teilnehmerstellenindividuellen Zeitlage abgesandt werden, daß auf der verzweigerindividuellen Lichtwellenleiter-Anschlußleitung (MAI) die einzelnen Bursts in zumindest angenähert gleichen Abständen aufeinanderfolgen.

4. Telekommunikationssystem nach einem der Ansprüche 1 bis 3, **dadurch gekennzeichnet,** daß von den bei den Teilnehmerstellen (TSt) vorgesehenen Netzabschlußeinrichtungen (NTF) jeweils nur die in dem der jeweiligen Teilnehmerstelle (TSt) zugehörigen Zeitkanal empfangenen Signale an das jeweilige Teilnehmer-Endgerät weitergegeben werden.

5. Telekommunikationssystem nach einem der Ansprche 1 bis 4, **dadurch gekennzeichnet,** daß den einzelnen Teilnehmerstellen (TSt) ein Zeitkanal jeweils nur auf Anforderung zugeteilt ist.

6. Telekommunikationssystem nach einem der Ansprüche 1 bis 5, **dadurch gekennzeichnet,** daß der optische Verzweiger (OV) mit einem Reflektionsmischer gebildet ist.

7. Telekommunikationssystem nach einem der Ansprüche 1 bis 5, **dadurch gekennzeichnet,** daß der optische Verzweiger (OV) mit einem Durchgangsmischer gebildet ist.

8. Telekommunikationssystem nach einem der Ansprüche 1 bis 7, **dadurch gekennzeichnet,** daß bei bidirektionalem Wellenlängenmultiplex auf den Lichtwellenleitern (MAI, AI) zur Signalübertragung von der Vermittlungsstelle (VSt) zu den Teilnehmerstellen (TSt) hin das 850-nm-Band und zur Signalübertragung von den Teilnehmerstellen (TSt) zur Vermittlungsstelle (VSt) hin das 1300-nm-Band genutzt wird.

9. Telekommunikationssystem nach einem der Ansprüche 1 bis 8, **dadurch gekennzeichnet,** daß bei bidirektionalem Wellenlängenmultiplex auf den Lichtwellenleitern (MAI, AI) zumindest in der Vermittlungsstelle (VSt) als elektro/optischer Wandler eine Laserdiode und als opto/elektrischer Wandler eine Avalanche-Photodiode vorgesehen ist.

## Claims

1. Integrated services telecommunications system for narrowband services, in which in each case a plurality of subscriber stations (TSta,...TStt) are connected in each case via their own optical waveguide subscriber line (Ala,...Alt) to a concentrator (OV), which is connected via a multiplex line (MAI) to a multiplex connection circuit (SLMF) of an exchange (VSt), characterized in that the individual subscriber stations (TSta,...TStt) are connected in each case via their optical waveguide subscriber line (Ala,...Alt) to a common optical coupler (OV) which is connected to the multiplex connection circuit (SLMF) of the exchange (VSt) via a couplerspecific optical waveguide connection line (MAI), means being provided so that the signal transmission proceeds from the exchange (VSt) to the subscriber stations (TSt) in an ISDN basic access (BA) multiplex frame, and in that means are provided so that the signal transmission proceeds from the subscriber stations (TSta,...TStt) to the exchange (VSt) in each case in the time slot of the ISDN BA multiplex frame associated with the respective subscriber station (TSt) in bursts of such duration and time position that, on the coupler-specific optical waveguide connection line (MAI), a burst transmitted over an optical waveguide subscriber line (AI) of maximum transit time does not yet overlap with the next burst in the multiplex frame, and a burst transmitted over an optical waveguide subscriber line (AI) of minimum transit time does not yet overlap with the preceding burst in the multiplex frame.

2. Telecommunications system according to Claim 1, characterized in that means are provided so that the burst duration is at most equal to the time slot duration (t) reduced by twice the difference between maximum and minimum transit time.

3. Telecommunications system according to Claim 1 or 2, characterized in that means are provided so that the bursts from the individual subscriber stations (TSta,..TStt) are in each case transmitted in such a subscriber-station-specific time position that the individual bursts follow one another on the couplerspecific optical waveguide connection line (MAI) at at least approximately equal intervals

4. Telecommunications system according to one of Claims 1 to 3, characterised in that in each case only the signals received in the time slot associated with the respective subscriber station (TSt) are forwarded by the network terminating devices (NTF) provided at the subscriber stations (TSt) to the respective subscriber terminal.

5. Telecommunications system according to one of Claims 1 to 4, characterized in that a time slot is allocated to the individual subscriber stations (TSt) in each cane only on request

6. Telecommunications system according to one of Claims 1 to 5, characterized in that the optical coupler (OV) is formed by a reflective mixer.

7. Telecommunications system according to one of Claims 1 to 5, characterized in that the optical coupler (OV) is formed by a transmissive mixer.

8. Telecommunications system according to one of Claims 1 to 7, characterized in that in the case of bidirectional wavelength multiplex on the optical waveguides (MAI, AI), the 850 nm band is used for signal transmission from the exchange (VSt) to the subscriber stations (TSt), and the 1300 nm band is used for signal transmission from the subscriber stations (TSt) to the exchange (VSt).

9. Telecommunications system according to one of Claims 1 to 8, characterized in that in the case of bidirectional wavelength multiplex on the optical waveguides (MAI, AI), a laser diode is provided an electrooptical transducer and an avalanche photodiode is provided an optoelectronic transducer, at least in the exchange (VSt).

## Revendications

1. Système de télécommunications à intégration de services pour des services à bande étroite, dans laquelle respectivement une multiplicité de postes d'abonnés (TSta,... TStt) sont raccordés, respectivement par l'intermédiaire d'une ligne particulière d'abonné (Ala... Alt) formée d'un guide d'ondes optiques, à un concentrateur (OV), qui est raccordé à un circuit de raccordement multiplex (SLMF) d'un central (VSt) par l'intermédiaire d'une ligne de multiplexage (MAI), caractérisé par le fait que les différents postes d'abonnés (TSta... TStt) sont raccordés respectivement par l'intermédiaire de leur ligne d'abonné (Ala...Alt) formé d'un guide d'ondes optiques, à un répartiteur optique commun (OV), qui est raccordé au circuit de raccordement multiplex (SLMF) du central (VSt) par l'intermédiaire d'une ligne de raccordement (MAI) formée d'un guide d'ondes optiques et propre à ce répartiteur, et dans lequel il est prévu des moyens tels que la transmission des signaux depuis le central (VSt) aux postes d'abonnés (TSt) se déroule dans un cadre multiplex de raccordement de base (ISDN) et qu'il est prévu des moyens tels que la transmission de signaux depuis les postes d'abonnés (TSta...TStt) en direction du central (VSt) se déroule respectivement dans le canal temporel, associé au poste d'abonné respectif (TSt), de la trame multiplex ISDN-BA selon des rafales possédant une durée et une position temporelles telles que dans la ligne de raccordement (MAI) formée d'un guide d'ondes optiques et propre au répartiteur, une rafale transmise par l'intermédiaire d'une ligne d'abonné (AI) formée d'un guide d'ondes optiques, avec un temps de propagation maximum, n'est pas encore en chevauchement avec la rafale qui succède dans la trame de multiplexage, et qu'une rafale transmise par l'intermédiaire d'une ligne d'abonné (AI) formée d'un guide d'ondes optiques, pendant un temps de propagation minimum, n'est pas encore en chevauchement avec la rafale précédente dans la trame de multiplexage.

2. Système de télécommunications suivant la revendication 1, caractérisé par le fait qu'il est prévu des moyens tels que la durée de la rafale est égale au maximum à la durée (t) de la plage temporelle, diminuée du double de la différence entre les temps de propagation maximum et minimum.

3. Système de télécommunications suivant la revendication 1 ou 2, caractérisé par le fait qu'il est prévu des moyens tels que les rafales sont émises par les différents postes d'abonnés (TSta... TStt) respectivement dans une position temporelle prévue individuellement pour chaque poste d'abonné et telle que dans la ligne de raccordement (MAI) formée d'un guide d'ondes optiques et propre au répartiteur, les différentes rafales se succèdent à des intervalles au moins approximativement identiques

4 Système de télécommunications suivant l'une des revendications 1 à 3, caractérisé par le fait que les dispositifs (NTF) de terminaison du réseau, prévus dans les postes d'abonnés (TSt), ne transmettent respectivement que les signaux reçus dans le canal temporel associé aux postes d'abonnés respectifs (TSt), à l'appareil terminal d'abonné respectif.

5. Système de télécommunications suivant l'une des revendications 1 à 4, caractérisé par le fait qu'un canal temporel n'est affecté respectivement que sur demande aux différents postes d'abonnés (TSt).

6. Système de télécommunications suivant l'une des revendications 1 à 5, caractérisé par le fait que le répartiteur optique (OV) est formé par un mélangeur à réflexion.

7. Système de télécommunications suivant l'une des revendications 1 à 5, caractérisé par le fait que le répartiteur optique (OV) est formée par un mélangeur à transit.

8. Système de télécommunications suivant l'une des revendications 1 à 7, caractérisé par le fait que dans le cas d'un multiplexage bidirectionnel des longueurs d'ondes dans les guides d'ondes optiques (Mal,Al), on utilise la bande à 850 nm pour la transmission de signaux depuis le central (VSt) en direction des postes d'abonnés (TSt) et on utilise la bande à 1300 nm pour la transmission des signaux depuis les postes d'abonnés (TSt) en direction du central (VSt).

9. Système de télécommunications suivant l'une des revendications 1 à 8, caractérisé par le fait que, dans le cas du multiplexage bidirectionnel des longueurs d'ondes dans les guides d'ondes optiques (MAI, AI), il est prévu, au moins dans le central (VSt), une diode laser en tant que transducteur électro-optique et une photodiode à avalanche en tant que transducteur opto-électrique.